# EUROPÄISCHE PATENTSCHRIFT

(11) **EP 1 701 423 B1**
(45) Veröffentlichungstag und Bekanntmachung des Hinweises auf die Patenterteilung: **08.02.2012**
(21) Anmeldenummer: 06004240.5
(22) Anmeldetag: 02.03.2006
(51) Int. Cl.: H02H 9/02, H02H 9/04, H02H 3/02

(54) **Massnahme zur Erhöhung der Kurzschlussfestigkeit eines Gerätes durch Verwendung eines parallelen Strompfades**
Arrangement for improving the short circuit withstandability of an appliance by use of a bypass
Arrangement pour améliorer la résistance aux courts-circuits d'un appareil en utilisant un shunt

(30) Priorität: 03.03.2005 DE 102005009789; 03.03.2005 US 658320 P
(43) Veröffentlichungstag der Anmeldung: 13.09.2006
(73) Patentinhaber: Airbus Operations GmbH, 21129 Hamburg (DE)
(72) Erfinder: Scheffler, Sebastian, 20257 Hamburg (DE)
(74) Vertreter: Maiwald Patentanwalts GmbH

(56) Entgegenhaltungen:
- WO-A-92/07402
- DE-A1- 4 110 335
- DE-A1- 19 829 775
- GB-A- 1 449 607
- GB-A- 2 177 560
- GB-A- 2 336 046
- GB-A- 2 347 755
- US-A- 3 815 013

## Beschreibung

Die vorliegende Erfindung betrifft eine Kontrolleinheit zum Schützen eines elektrischen Meßwertgebers vor einem Überstrom und ein Fortbewegungsmittel.

### HINTERGRUND DER ERFINDUNG

Eine Vorschrift bei elektronischen Flugzeugkomponenten besteht darin, die jeweiligen Anschlüsse vor Kurzschlüssen zu schützen. Diese Kurzschlussströme können mehrere 100 Ampere übersteigen und somit die betroffenen elektrischen Vorrichtungen zerstören, da diese dadurch dem Vielfachen ihrer üblichen Belastung ausgesetzt sind. Diese hohen Überströme können entstehen, weil in Flugzeugen häufig der innere Widerstand der elektrischen Bauteile so klein wie möglich gehalten wird, um einen möglichst hohen Wirkungsgrad zu erreichen.

Obwohl die hohen Kurzschlussströme innerhalb weniger Millisekunden abgestellt werden, muss jede elektronische Vorrichtung in dem Schaltkreis dahingehend überprüft werden, ob sie die anliegenden Kurzschlussströme bewältigen kann. Ausschlaggebend ist dabei das schwächste interne elektrische Bauteil der elektrischen Vorrichtung. Da die Belastungsgrenze dieses schwächsten Bauteils oftmals nicht ausreicht, um den Kurzschlussstrom zu bewältigen, kann somit die gesamte Vorrichtung beschädigt werden. Somit müssen zusätzliche Vorkehrungen getroffen werden, die den Überstrom unter die Belastungsgrenze des schwächsten Bauteils senken. Diese Vorkehrungen sind umso billiger, je höher die Belastungsgrenze bei Kurzschluss der schwächsten Geräte sind. Jedoch ist der Einsatz von robusteren Geräten mit einer höheren Belastungsgrenze oftmals aufgrund der zu verwendenden Technologie oder der Designvorgaben, wie beispielsweise Volumen- oder Gewichtrestriktionen, begrenzt.

Eine bekannte Vorkehrung, um eine elektrische Vorrichtung zu schützen, ist der Einsatz einer Einwegsicherung, die im Falle eines Kurzschlussstromes den Stromkreis unterbricht, ohne dabei Rauch oder Feuer während eines Kurzschlusses zu verursachen. Die Verwendung dieser Sicherungen in Flugzeuganwendungen ist jedoch zu vermeiden, da sie zum Reparieren oder Austauschen nur schlecht erreichbar sind.

Ein weiterer Ansatz besteht darin, den Überstrom in dem Stromkreis zu reduzieren. Dies wird bei einer Schaltung mit Wechselstrom üblicherweise mit einer Spule erreicht. Diese Spule erhöht den inneren Widerstand der elektrischen Vorrichtung und begrenzt somit die Höhe des Kurzschlussstroms. Da jedoch die Normalladung beispielsweise für Heizungsvorrichtungen in Flugzeugen 1,5 kVA übersteigen kann, muss die Spule dafür ausgelegt sein, permanent einer Stromstärke von 12 Ampere standzuhalten. Um darüber hinaus den Verlust so klein wie möglich zu halten, werden große Drahtdurchmesser benötigt, wodurch jedoch ein hohes Gewicht verursacht wird, vor allem da die Spulen vorwiegend aus Kupfer bestehen und einen Kern aus einem ferromagnetischen Metall aufweisen können.

Eine Schaltung zur Vermeidung von Überspannungen ist etwa bekannt aus GB 1 449 607, gemäß der ein Spannungsabfall über einen Widerstand zur Auslösung eines Thyristors führt, der dann eine Überspannung abbaut.

Aus GB 2,177,560 A, GB 2,347,755 A und US 3,815,013 sind anti-parallel geschaltete Dioden bekannt, die unmittelbar parallel zu Eingängen eines Operationsverstärkers geschaltet sind.

Es ist eine Aufgabe der Erfindung, einen kostengünstigen und leichtgewichtigen Überstromschutz zu ermöglichen.

Diese Aufgabe wird durch eine Kontrolleinheit für ein Flugzeug zum Schützen eines elektrischen Messwertgebers vor einem Überstrom mit den Merkmalen gemäß dem unabhängigen Patentanspruch gelöst. Weitere Ausgestaltungen sind in den abhängigen Ansprüchen wiedergegeben.

Gemäß einem exemplarischen Ausführungsbeispiel der Erfindung ist eine Überstromschutzanordnung für ein Flugzeug bereitgestellt, die ein gegen Überstrom zu schützendes elektrisches Element und eine Überstromschutzvorrichtung aufweist, wobei die Überstromschutzvorrichtung eingerichtet ist, einen Strom durch das zu schützende elektrische Element derart über die Überstromschutzvorrichtung umzuleiten, dass der Strom durch das zu schützende Element eine Strom-Höchstgrenze nicht überschreitet.

Erfindungsgemäß wird eine Impedanz mit dem zu schützenden elektrischen Bauteil in Serie geschaltet, um den Spannungsabfall in dem zu schützenden Bauteil zu erhöhen und somit das Auslösen der Ableitung bzw. Übernahme des Kurzschlussstroms zu verbessern. Die Impedanz kann dabei aus mindestens einem ohmschen Widerstand und/oder mindestens einer Spule bestehen.

Gemäß noch einem anderen exemplarischen Ausführungsbeispiel der Erfindung ist ein Fortbewegungsmittel, insbesondere ein Flugzeug, bereitgestellt, das eine Überstromschutzanordnung mit den oben beschriebenen Merkmalen aufweist.

Erfindungsgemäß kann ein Überstrom abgeleitet und somit an dem zu schützenden Bauteil verringert werden, wodurch sich die Belastungsgrenze des zu schützenden Bauteils erhöht und somit beispielsweise die Größe und das Gewicht der weiteren Schutzvorkehrungen verringert werden. Dadurch wird insbesondere bei Implementierung der Überstromschutzanordnung in einem Flugzeug ermöglicht, darin enthaltene elektrische Bauelemente und Schaltungen sicher, kostengünstig und leichtgewichtig vor Beschädigung durch einen möglicherweise auftretenden Überstrom zu schützen. Ein leichtes Gewicht eines Flugzeugs ist ein besonderes Anliegen, ebenso wie die Gewährleistung eines besonders hohen Sicherheitsstandards.

Gemäß einem exemplarischen Ausführungsbeispiel der Erfindung umfasst eine Überstromschutzanordnung das zu schützende elektrische Bauteil und eine Sicherungsvorrichtung, die einen Überstrom erkennt und daraufhin den Strom von dem elektrischen Bauteil ableitet, womit der an dem elektrischen Bauteil anliegende Überstrom reduziert wird. Die Sicherungsvorrichtung kann einen Kurzschlussstrom anhand eines Spannungsabfalls erkennen, der durch einen Kurzschluss entstehen kann. Die Sicherungsvorrichtung kann parallel zu dem elektrischen Bauteil geschaltet werden.

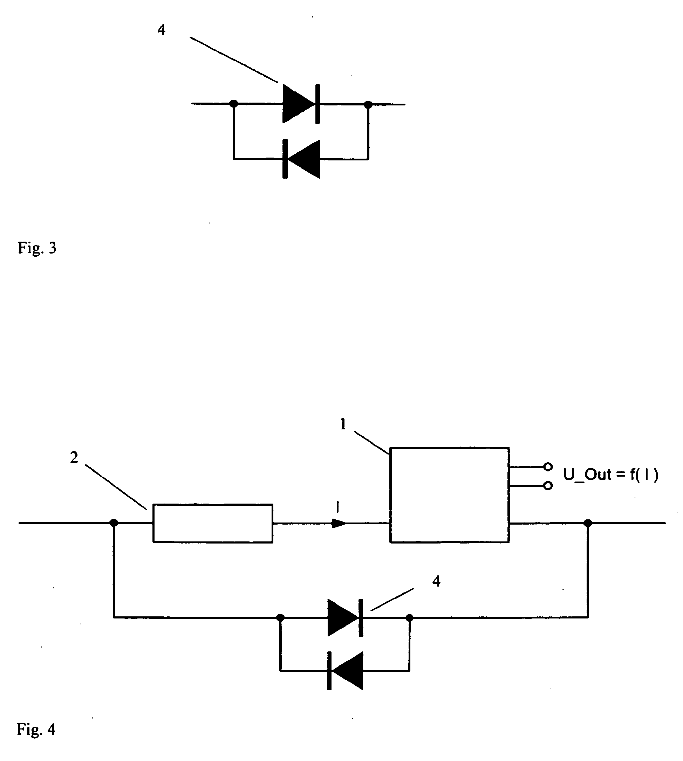

Die Sicherungsvorrichtung kann eine symmetrische und/oder eine nicht-lineare Strom-/Spannungskurve aufweisen. Unter symmetrisch wird insbesondere eine Strom-/Spannungskurve verstanden, die bei positiven Strömen eine entsprechende Spannungsantwort hervorruft wie bei negativen Strömen. Nichtlinear ist eine Strom-/Spannungskurve insbesondere dann, wenn keine direkte Proportionalität zwischen Strom und Spannung besteht. Eine ausgeprägte Nichtlinearität stellt sicher, dass der Überstromschutz relativ abrupt erfolgen kann, und das elektrische Bauelement unterhalb eines Schwellwerts im Wesentlichen nicht beeinflusst. Gemäß einem Ausführungsbeispiel der vorliegenden Erfindung kann hierfür eine Diodenschaltung, beispielsweise wie in Fig. 3, vorgesehen werden.

Eine exemplarische Variante der Sicherungsvorrichtung besteht aus zwei antiparallel geschalteten Dioden. Die Dioden können Silizium-, Germanium-, Schottky-, Zener- oder Supressordioden sein. Auch andere Halbleiterbauelemente wie Transistoren, insbesondere als Dioden verschaltete Transistoren, beispielsweise MOSFETs, können zum Einsatz kommen.

Um den Überstrom an dem elektrischen Element weiter zu verringern, besteht die Möglichkeit, mehrere Überstromschutzvorrichtungen insbesondere parallel zu dem elektrischem Bauteil zu schalten. Bei Ausfall einer Überstromschutzvorrichtung können die verbleibenden Überstromschutzvorrichtungen den Überstromschutz sicherstellen, so dass die Störanfälligkeit herabgesetzt werden kann.

Die Ausgestaltungen der Überstromschutzanordnung gelten auch für das Verfahren und für das Fortbewegungsmittel, und umgekehrt.

Die Erfindung ermöglicht die Verbesserung der Kurzschlussfestigkeit einer elektrischen Vorrichtung in Flugzeugen durch Ableiten des Kurzschlussstromes. Eine solche Überstromschutzanordnung umfasst dabei zum Beispiel ein zu schützendes elektrisches Bauteil und ein Sicherungselement, das einen Überstrom erkennt und daraufhin den an dem elektrischen Bauteil anliegenden Überstrom ableitet bzw. übernimmt und dadurch verringert.

Die Erfindung schafft deswegen eine Anordnung zur Erhöhung der Kurzschlussfestigkeit und verringert simultan das Gewicht und die Größe der eingesetzten Sicherungselemente. Da ein Flugzeug mehr als 100 Heizkreise umfassen kann, die gegen Überströme oder Überspannungen zu sichern sind, ist schon eine geringe Gewichtsersparnis von zum Beispiel 10g pro Heizungsvorrichtung signifikant.

Die Erfindung kann zum Beispiel hartverdrahtet oder als monolithisch integrierter Schaltkreis realisiert sein.

Der Überstromschutz gemäß der Erfindung kann in einem beliebigen Fortbewegungsmittel eingesetzt werden, zum Beispiel in einem Flugzeug, einem Hubschrauber, einem Auto (PKW, LKW), einem Bus, einem Zug oder einem Schiff.

Im Folgenden sind zur weiteren Erläuterung und zum besseren Verständnis der vorliegenden Erfindung Ausführungsbeispiele unter Bezugnahme auf die beigefügten Zeichnungen näher beschrieben. Es zeigt:
- Fig. 1: eine schematische Darstellung einer elektrischen Vorrichtung;
- Fig. 2: eine schematische Darstellung einer Überstromschutzanordnung gemäß einem exemplarischen Ausführungsbeispiel der Erfindung;
- Fig. 3: eine schematisierte Ansicht antiparallel geschalteter Dioden als Überstromschutzvorrichtung gemäß einem exemplarischen Ausführungsbeispiel der Erfindung;
- Fig. 4: eine schematische Darstellung einer Überstromschutzanordnung gemäß einem exemplarischen Ausführungsbeispiel der Erfindung;
- Fig. 5: eine schematische Darstellung einer Überstromschutzanordnung gemäß einem exemplarischen Ausführungsbeispiel der Erfindung.

Gleiche oder ähnliche Komponenten in unterschiedlichen Figuren sind mit gleichen Bezugsziffern versehen. Die Darstellungen in den Figuren sind schematisch und nicht maßstäblich.

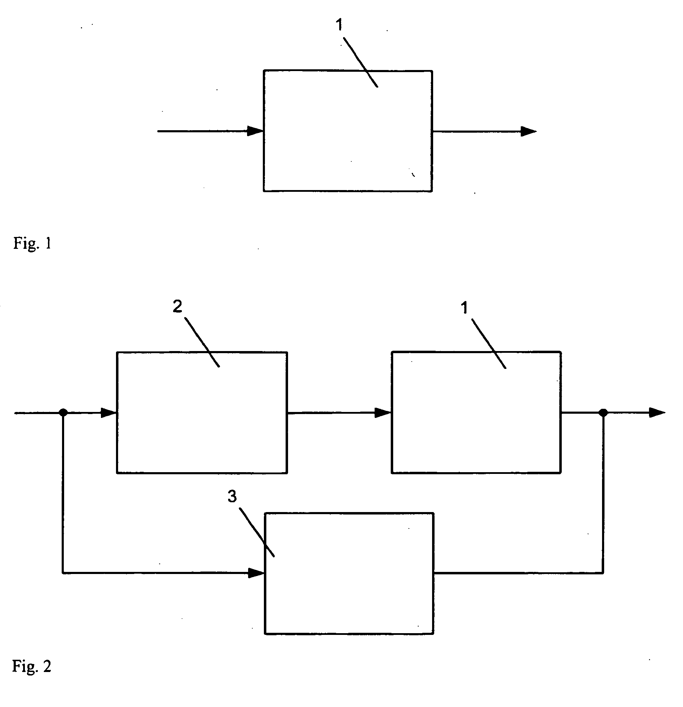

In Fig. 1 wird ein elektrisches Bauteil dargestellt, dass im Folgenden das schwächste Glied in einem Schaltkreis darstellt, d.h. diejenige Komponente eines Schaltkreises darstellt, die gegen Überstrom geschützt werden soll. Zum Beispiel sollen Hall-Sonden einer Kontrolleinheit für Heizungsvorrichtungen in einem Passagierflugzeug effektiv vor einer Beschädigung vor Überstrom geschützt werden.

Fig. 2 zeigt eine Überstromschutzanordnung gemäß einem exemplarischen Ausführungsbeispiel der Erfindung, die in einem Passagierflugzeug implementiert ist.

Vor dem zu schützenden elektrischen Bauteil 1 ist eine Impedanz 2 in Reihe geschaltet, und parallel zu den Elementen 1 und 2 ist eine Sicherungsvorrichtung 3 oder auch Überstromschutzeinrichtung geschaltet wird. Ein durch einen Kurzschluss entstehender Spannungsabfall kann nun dazu verwendet werden, dass die Sicherungsvorrichtung 3 den Überstrom erkennt und den Strom durch den parallelen Zweig, in den sie geschaltet ist, übernimmt bzw. ableitet. Die Grenzspannung, bei der die Sicherungsvorrichtung 3 den Strom durch den parallelen Zweig ableitet, muss so eingestellt werden, dass der Überstrom niemals die Höchstgrenze des elektrischen Bauteils 1 übersteigt. Dazu kann der zum elektrischen Element 1 in Reihe geschaltete Widerstand 2 oder die Durchlassspannung bzw. die Kennlinie der Sicherungsvorrichtung 3 angepasst werden.

Zum Beispiel kann die Sicherungsvorrichtung 3 eine solche Strom-Spannungs-Kennlinie aufweisen, dass bei Auftreten eines ausreichend starken Stroms oder einer ausreichend hohen Spannung die Sicherungsvorrichtung 3 deutlich niederohmiger wird, so dass Strom entsprechend der U/I-Kennlinie zu einem jeweiligen Anteil aus dem Zweig mit dem zu schützenden elektrischen Bauteil 1 abgezweigt und durch den Pfad mit der Sicherungsvorrichtung 3 geleitet oder abgeführt bzw. übernommen wird.

Die Sicherungsvorrichtung 3 weist bevorzugt eine symmetrische und nicht-lineare U/I-Charakteristik auf. Diese nicht-lineare Charakteristik ermöglicht, dass während der normalen Betriebsbedingungen kein bzw. kaum Strom durch die Überstromschutzvorrichtung 3 fließt und somit die Funktion des elektronischen Bauteils 1, beispielsweise wenn das elektronische Bauteil als Strommessgerät fungiert, kaum beeinträchtigt wird.

Fig.3 zeigt eine beispielhafte Ausführungsform einer solchen Überstromschutzvorrichtung 3, in der zwei antiparallele Dioden 4 parallel geschaltet sind.

Um den Verlust durch die Impedanz 2 zu reduzieren, sollte der Spannungsabfall, bei dem der parallele Zweig im Kurzschlussfall durch die Sicherungsvorrichtung 3 aktiviert wird, möglichst klein gewählt werden. Dabei können verschiedene Dioden 4 mit unterschiedlichen Kennlinien, wie beispielsweise Silizium-, Germanium-, Schottky-, Zener-, oder Suppressordioden, ausgewählt werden, die sich je nach Anwendungsfall besonders gut eignen. Die Stromstärke wird entsprechend der spezifischen U/I- Kennlinien der Dioden 4 in einem bestimmten Verhältnis von den jeweiligen Zweigen übernommen.

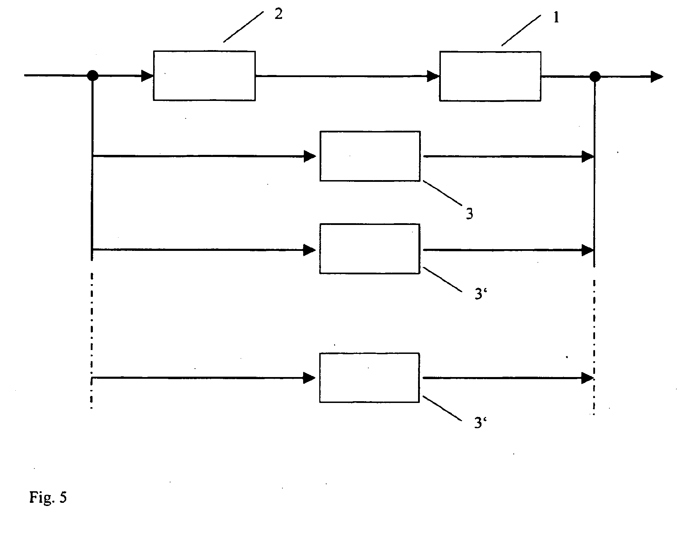

Der Überstrom kann auch dadurch aufgeteilt und die Fehlerrobustheit verbessert werden, indem mehrere Überstromschutzvorrichtungen 3', beispielsweise aus antiparallel geschalteten Dioden 4, zu dem zu schützenden elektrischen Bauteil 1 parallel geschaltet werden (siehe Fig.5).

Anhand eines Beispiels soll im Folgenden bezugnehmend auf Fig. 4 die Funktion der erfindungsgemäßen Schaltung verdeutlicht werden.

In Flugzeugen kann die erfindungsgemäße Schaltung u.a. in Kontrolleinheiten von Heizelementen vorteilhaft verwendet werden. Die Heizelemente werden mit Wechselspannung versorgt und durch Kontrolleinheiten geregelt und überwacht. Die Kontrolleinheiten erkennen ebenfalls, ob sich eine Störung, wie beispielsweise ein Kurzschluss, in einem Schaltkreis befindet. Um dies festzustellen, umfasst die Kontrolleinheit u.a. ein Strommessgerät, das wie beispielsweise in Fig. 4 aus einen Messwertgeber (Hall-Sensor) besteht. Dieser Messwertgeber stellt sich in der Praxis jedoch häufig als das schwächste oder fehleranfälligste Glied gegenüber einem Kurzschlussstrom heraus, so dass hier, wie eingangs erwähnt, konventionell eine Spule eingesetzt wird, um den Widerstand des Messwertesgebers zu erhöhen. Da der Spannungsabfall an dem Strommessgerät jedoch äußerst gering ist, kann ein Widerstand mit wenigen mΩ eingesetzt werden, um die Grenzspannung der parallel geschalteten Dioden 4 zu erreichen.

Die erfindungsgemäße Schaltungsanordnung (siehe Fig. 4) hat hierbei den Vorteil, die Belastungsgrenzen gegenüber einem Überstrom für den Messwertgeber und somit für die gesamte Kontrolleinheit zu erhöhen

Anhand eines Zahlenbeispiels lässt sich die Wirkungsweise der Erfindung verdeutlichen. Bei einer Grenzbelastung des Strommessgerätes wird eine Diode 4 mit einer ihrer U/I-Kennlinie entsprechenden Durchlassspannung von 2 V bei 200 A gewählt, sodass bei vernachlässigbarem inneren Widerstand des Strommessgerätes ein Widerstand mit 10 mΩ gewählt werden kann, um den parallelen Zweig des Schaltungsanordnung derart zu aktivieren, dass die kritische Stromstärke des zu schützenden Elements 1 nicht erreicht wird. Dadurch wird folglich der Strom auf die beiden Zweige verhältnismäßig entsprechend der U/I-Kennlinie der Diode 4 aufgeteilt und im Umkehrschluss die Grenzbelastung des Strommessgerätes um beispielsweise den Faktor 2 erhöht. Daher besteht nun die Möglichkeit, die Größe der Spule zu verringern, sodass ungefähr mit dem selben Faktor 2 das Gewicht und Volumen eingespart werden kann. Ebenfalls von Vorteil ist der geringe Verlust der erfindungsgemäßen Schaltungsanordnung, der bei einer Stromstärke von 12 A lediglich 1,44 Watt beträgt und somit gleich oder geringer als der Verlust der Strombegrenzungsspule.

Ergänzend ist darauf hinzuweisen, dass "aufweisend" und "umfassend" keine anderen Elemente ausschließt und "eine" oder "ein" keine Vielzahl ausschließt. Ferner sei darauf hingewiesen, dass Merkmale , die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Kontrolleinheit für ein Flugzeug, umfassend:
- einen elektrischen Messwertgeber (1), welcher gegen Überstrom zu schützen ist;
- eine Impedanz (2), welche mit dem elektrischen Messwertgeber in Reihe geschaltet ist;
- zwei antiparallel geschaltete Dioden (3), welche der Reihenschaltung aus elektrischem Messwertgeber und Impedanz parallel geschaltet sind,
wobei die antiparallel geschalteten Dioden (3) eingerichtet sind, einen Überstrom durch den zu schützenden elektrischen Messwertgeber (1) zu erkennen und derart über die antiparallel geschalteten Dioden (3) abzuleiten, dass der Strom durch den zu schützenden elektrischen Messwertgeber (1) eine Strom-Höchstgrenze nicht überschreitet.

2. Kontrolleinheit nach Anspruch 1, wobei die antiparallel geschalteten Dioden (3) eine symmetrische Strom-/Spannungskurve aufweisen.

3. Kontrolleinheit nach einem der Ansprüche 1 bis 2, wobei die antiparallel geschalteten Dioden (3) eine nicht-lineare Strom-/Spannungskennlinie aufweisen.

4. Kontrolleinheit nach einem der Ansprüche 1 bis 3, wobei die Dioden (4) ausgewählt sind aus der Gruppe bestehend aus einer Siliziumdiode, einer Germaniumdiode, einer Schottkydiode, einer Zenerdiode und einer Supressordiode.

5. Kontrolleinheit nach einem der Ansprüche 1 bis 4, die mindestens eine zusätzliche Überstromschutzvorrichtung (3') aufweist, die zu den antiparallel geschalteten Dioden (3) und der Reihenschaltung aus elektrischem Messwertgeber und Impedanz parallel geschaltet ist.

6. Kontrolleinheit nach einem der Ansprüche 1 bis 5, wobei die Impedanz ein ohmscher Widerstand ist.

7. Kontrolleinheit nach einem der Ansprüche 1 bis 6, wobei die Impedanz eine Spule ist.

8. Kontrolleinheit nach einem der Ansprüche 1 bis 7, wobei die antiparallel geschalteten Dioden (3) eingerichtet sind, oberhalb eines vorgegebenen Stromstärke-Schwellwerts Strom von dem zu schützenden elektrischen Messwertgeber (1) abzuleiten.

9. Fortbewegungsmittel, umfassend ein Kontrolleinheit gemäß einem der Ansprüche 1 bis 8.

10. Fortbewegungsmittel nach Anspruch 9, wobei das Fortbewegungsmittel ein Flugzeug ist.

## Claims

1. A monitory unit for an aircraft, comprising:
- an electrical measuring transducer (1) that is to be protected against overcurrent;
- an impedance (2) that is connected in series with the electrical measuring transducer;
- two antiparallel diodes (3) that are connected in parallel with the series connection that comprises the electrical measuring transducer and the impedance,
wherein the antiparallel diodes (3) are designed to detect any overcurrent flowing through the electrical measuring transducer (1) to be protected, and to deflect said overcurrent in such a manner by way of the antiparallel diodes (3) that the current flowing through the electrical measuring transducer (1) to be protected does not exceed a current maximum limit.

2. The monitory unit of claim 1, wherein the antiparallel diodes (3) comprise a symmetrical current/voltage curve.

3. The monitory unit of one of claims 1 to 2, wherein the antiparallel diodes (3) comprise a non-linear current/voltage characteristic.

4. The monitory unit of any one of claims 1 to 3, wherein the diodes (4) are selected from the group comprising a silicon diode, a germanium diode, a Schottky diode, a Zener diode and a suppressor diode.

5. The monitory unit of any one of claims 1 to 4 which comprises at least one additional overcurrent protection device (3') that is connected in parallel to the antiparallel diodes (3) and the series connection comprising the electrical measuring transducer and the impedance.

6. The monitory unit of any one of claims 1 to 5, wherein the impedance is an ohmic resistor.

7. The monitory unit of any one of claims 1 to 6, wherein the impedance is a coil.

8. The monitory unit of any one of claims 1 to 7, wherein the antiparallel diodes (3) are designed, above a predetermined current-intensity threshold value, to deflect current from the electrical measuring transducer (1) to be protected.

9. A means of transport, comprising a monitory unit of any one of claims 1 to 8.

10. The means of transport of claim 9, wherein the means of transport is an aircraft.

## Revendications

1. Unité de contrôle pour un avion, comprenant :
- un capteur de mesure électrique (1), qui doit être protégé contre une surintensité;
- une impédance (2), montée en série avec le capteur de mesure électrique ;
- deux diodes (3) antiparallèles, qui sont montées en parallèle du montage en série composé du capteur de mesure électrique et de l'impédance,
les diodes (3) antiparallèles étant conçues pour identifier une surintensité au travers du capteur de mesure électrique (1) de manière à la dériver vers les diodes antiparallèles, de sorte que le courant au travers du capteur de mesure électrique (1) à protéger ne dépasse pas par le haut un seuil maximal.

2. Unité de contrôle suivant la revendication 1, dans laquelle les diodes (3) antiparallèles présentent une courbe symétrique courant/tension.

3. Unité de contrôle suivant l'une des revendications 1 à 2, dans laquelle les diodes (3) antiparallèles présentent une caractéristique courant/tension non linéaire.

4. Unité de contrôle suivant l'une des revendications 1 à 3, dans laquelle les diodes (4) sont sélectionnées parmi le groupe constitué d'une diode au silicium, d'une diode au germanium, d'une diode à barrière de Schottky, d'une diode de Zener et d'une diode suppresseuse de surtension.

5. Unité de contrôle suivant l'une des revendications 1 à 4, qui présente au moins un dispositif de protection supplémentaire (3') contre les surintensités, lequel dispositif est monté en parallèle des diodes (3) antiparallèles et du montage en série composé du capteur de mesure électrique et de l'impédance.

6. Unité de contrôle suivant l'une des revendications 1 à 5, dans laquelle l'impédance est une résistance ohmique.

7. Unité de contrôle suivant l'une des revendications 1 à 6, dans laquelle l'impédance est une bobine.

8. Unité de contrôle suivant l'une des revendications 1 à 7, dans laquelle les diodes (3) antiparallèles sont conçues pour dériver du courant du capteur de mesure électrique (1) à protéger au-dessus d'un seuil d'intensité de courant prédéfini.

9. Moyen de déplacement, comprenant une unité de contrôle suivant l'une des revendications 1 à 8.

10. Moyen de déplacement suivant la revendication 9, dans lequel le moyen de déplacement est un avion.
